Europäisches Patentamt

European Patent Office

Office européen des brevets

(19)

(11) Numéro de publication: **0 113 615**
**B1**

(12) **FASCICULE DE BREVET EUROPEEN**

(45) Date de publication du fascicule du brevet: **03.02.88**

(51) Int. Cl.⁴: **H 04 B 1/64**

(21) Numéro de dépôt: **83402358.2**

(22) Date de dépôt: **06.12.83**

(54) **Dispositif de traitement de la parole pour equipements radioélectriques adaptés à la transmission et à la réception de la parole.**

(30) Priorité: **10.12.82 FR 8220764**

(43) Date de publication de la demande:
**18.07.84 Bulletin 84/29**

(45) Mention de la délivrance du brevet:
**03.02.88 Bulletin 88/05**

(84) Etats contractants désignés:
**DE GB**

(56) Documents cités:
**GB-A- 775 918**
**US-A-3 462 561**
**US-A-3 885 111**

(73) Titulaire: **THOMSON-CSF**
**173, Boulevard Haussmann**
**F-75379 Paris Cédex 08 (FR)**

(72) Inventeur: **Deman, Pierre**
**THOMSON-CSF SCPI 173, bld Haussmann**
**F-75379 Paris Cedex 08 (FR)**
Inventeur: **Potage, Jean**
**THOMSON-CSF 173, Bld Haussmann**
**F-75379 Paris Cedex 08 (FR)**

(74) Mandataire: **Lincot, Georges et al**
**THOMSON-CSF SCPI 19, avenue de Messine**
**F-75008 Paris (FR)**

Courier Press, Leamington Spa, England.

# Description

La présente invention concerne un dispositif de traitement de la parole pour équipements radioélectriques adaptés à la transmission et à la réception de la parole, pouvant être utilisé, notamment, en radiotéléphonie.

On connaît des systèmes analogiques de traitement de la parole pour transmission sur voie radio, du type de celui connu sous la dénomination LINCOMPEX, du type décrit par exemple dans le brevet US—A—3 462 561, qui permettent, à l'aide d'une atténuation variable à l'émission, de maintenir un niveau de modulation de la parole à peu près constant pendant une durée voisine de quelques dizaines de millisecondes, ce qui améliore notablement le rapport signal/bruit obtenu en réception. Dans ces systèmes, la valeur de l'atténuation introduite à l'émission est transmise par un canal auxiliaire multiplexé en fréquence, par modulation en fréquence d'une sous-porteuse située dans le haut de la bande téléphonique, pour commander un expanseur situé au niveau du récepteur, qui n'est autre qu'un atténuateur fonctionnant à l'inverse de celui de l'émetteur, de façon à retrouver le niveau de parole existant avant sa compression. Ces systèmes purement analogiques sont utilisés en radiotéléphonie dans la gamme des ondes décamétriques.

Un perfectionnement au système LINCOMPEX est connu sous la dénomination SYNCOMPEX. Dans le système SYNCOMPEX la parole est traitée et transmise par paquets de durée finie (13,33 millisecondes) sur une voie principale et une voie auxiliaire sous la forme d'un canal radioélectrique de fréquence auxiliaire transmet des valeurs d'atténuations en numérique. Les codes correspondants sont transmis par un système de modulation à saut de fréquence du type "FSK", où "FSK" est l'abréviation du terme anglo-saxon "Frequency shift keying", et travaillant en diversité sur deux sous-porteuses introduites dans la bande vocale.

Bien que performants, ces systèmes ne suppriment pas les phénomènes d'échos engendrés soit par une diaphonie entre les voies d'émission et de réception ou encore par des microphones placés à proximité de haut-parleurs de réception.

Le but de l'invention est de remédier aux inconvénients précités.

A cet effet, l'invention a pour objet, un dispositif de traitement de la parole pour équipements radioélectriques adaptés à la transmission et à la réception de la parole, du type comprenant, un circuit de compression de la dynamique du signal de parole, formé par au moins un atténuateur variable d'émission, pour maintenir le niveau de parole à peu près constant durant l'émission de la parole et un expanseur pour rétablir à la réception le niveau de parole avant sa compression, un dispositif de commande de l'expanseur sensible à la valeur de l'atténuation introduite par l'atténuateur d'émission et transmise sur un canal radioélectrique auxiliaire de l'équipement, un circuit de filtrage logique du niveau de parole couplé au circuit de compression de la dynamique du signal de parole, pour fournir au circuit de compression une valeur d'atténuation en fonction du niveau du signal de parole, un circuit comparateur sélecteur, couplé par une première entrée à une sortie du circuit de filtrage logique et par une deuxième entrée à une sortie du dispositif de commande de l'expanseur, pour comparer les valeurs d'atténuation transmises par le circuit de filtrage logique aux valeurs d'atténuation reçues par le dispositif de commande de l'expanseur, le circuit comparateur sélecteur étant également couplé aux entrées de commande d'au moins un atténuateur d'émission, pour ajuster la valeur d'atténuation de l'atténuateur à la valeur d'atténuation délivrée par la sortie du circuit de filtrage logique, lorsque la valeur de l'atténuation délivrée par le circuit de filtrage logique est supérieure à la valeur d'atténuation délivrée par la sortie du dispositif de commande de l'expanseur et pour ajuster la valeur d'atténuation de l'atténuateur à la valeur de l'atténuation délivrée par la sortie du dispositif de commande de l'expanseur, dans le cas contraire, lorsque la valeur de l'atténuation délivrée par la sortie du dispositif de commande de l'expanseur est plus grande que celle délivrée par la sortie du circuit de filtrage logique, caractérisé en ce que le circuit de filtrage logique commande le circuit de compression par pas d'atténuation à peu près constants, et est couplé au circuit de compression de la dynamique du signal de parole au travers d'un détecteur de seuil pour appliquer à l'entrée du circuit comparateur une valeur d'atténuation croissante lorsque la puissance du signal de parole à la sortie du circuit de compression dépasse un premier seuil de puissance et une valeur d'atténuation décroissante lorsque la puissance du signal de parole est inférieure à un second seuil de puissance inférieur au premier seuil et transmet sur le canal auxiliaire lorsque le dispositif est en émission, une information incrémentable de niveau représentée par une suite d'éléments binaires ayant une première configuration lorsque le niveau en puissance du signal de parole détecté par le détecteur de seuil est en phase de croissance, une deuxième configuration lorsque le niveau en puissance du signal de parole est en phase de décroissance et au moins une troisième configuration lorsque le niveau en puissance du signal de parole conserve une valeur à peu près constante, et en ce que la deuxième entrée du circuit comparateur sélecteur est couplée à la sortie du dispositif de commande de l'expanseur au moyen d'un dispositif à retard qui laisse passer sans retard les valeurs d'atténuation retransmises par le dispositif de commande lorsque ces valeurs correspondent à une phase de croissance du signal vocal et retarde la transmission de ces valeurs en phase de décroissance du signal vocal.

Selon une autre variante de réalisation de l'invention, le dispositif comprend également, un circuit de détection de l'activité vocale, placé au niveau des circuits d'émission, permettant d'éviter l'occupation de l'éther par des émissions non significatives et qui en combinaison avec le circuit comparateur sélecteur, permet d'éviter des déclenchements intempestifs du détecteur d'activité vocale sur des échos qui annuleraient la majeure partie de l'efficacité de ce dernier.

D'autres caractéristiques et avantages de l'invention apparaîtront également à l'aide de la description qui va suivre, faite en regard des dessins annexés, donnés uniquement à titre d'exemple et dans lesquels:

— La figure 1 représente le schéma synoptique du dispositif de l'invention placé dans un terminal radio, en émission-réception simultanée et permanente, dans les deux sens de transmission (mode duplex).

— La figure 2 est une réalisation du circuit de filtrage logique de l'invention associé à un codeur différentiel.

— La figure 3 est un schéma représentant le dispositif de commande de l'expanseur.

— La figure 4 représente la deuxième variante de réalisation de l'invention mettant en oeuvre le détecteur d'activité vocale.

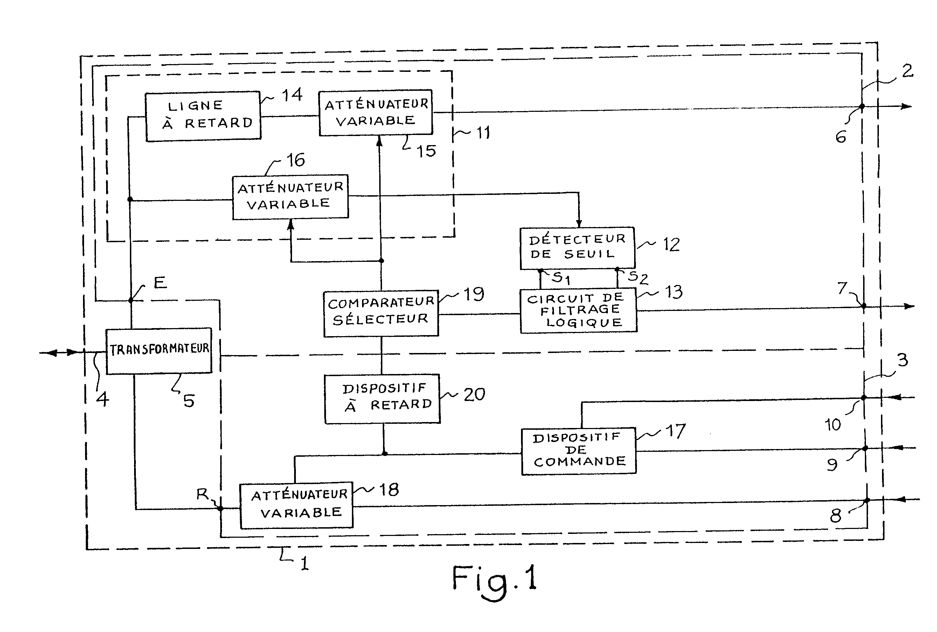

Le dispositif de traitement de la parole 1 selon l'invention, représenté à la figure 1 à l'intérieur d'un rectangle en pointillés, comprend, une partie émission 2 et une partie réception 3, également représentées à l'intérieur de la ligne en pointillés. Le dispositif 1 est relié à une ligne téléphonique 4 sur laquelle, transitent les signaux de parole par l'intermediaire d'un transformateur différentiel hybride 5. L'entrée du transformateur 5 qui n'est pas reliée à la ligne téléphonique 4 est directement reliée à la sortie R de la partie réception 3 et la sortie S du transformateur 5 est reliée directement à l'entrée E de la partie émission 2. La partie émission 2 du dispositif, est reliée par une sortie 6 au circuit radioélectrique d'émission de l'émetteur, non représenté, et transmet à ce dernier un signal de parole dont le niveau est maintenu à peu près constant. La partie émission 2 comprend également une sortie 7 qui est reliée au circuit d'émission de l'émetteur, non représenté, pour transmettre l'information codée de niveau sur un canal auxiliaire de l'émetteur non représenté. La partie réception 3 comprend, une entrée 8 qui est reliée au circuit de réception, non représenté, de l'émetteur récepteur, pour recevoir le signal de parole démodulé. La partie réception comprend également, une entrée 9 et une entrée 10. L'entrée 9 est reliée aux circuits de réception de l'émetteur-récepteur, non représentés, chargés de démoduler les informations transmises sur le canal auxiliaire de niveau. L'entrée 10 est reliée au circuit de démodulation du récepteur et reçoit un signal de pondération "e". La partie émission 2 est constituée par un circuit de compression 11, représenté également à l'intérieur d'une ligne en pointillés, qui est relié à un détecteur de seuil 12 et un circuit de filtrage logique 13. Le circuit de compression 11 est constitué par une ligne à retard 14, située entre l'entrée E de la partie émission et l'entrée d'un attenuateur variable 15. Le circuit de compression 11 comprend également, un atténuateur variable 16 dont l'entrée est reliée à l'entrée E de la partie émission 2 et dont la sortie est connectée à l'entrée du détecteur de seuil 12. Le détecteur de seuil 12 est relié par ses sorties S1 et S2 à des entrées respectives du circuit de filtrage logique 13. Le circuit de filtrage logique 13 est relié par une sortie à la sortie 7 du dispositif 1. La sortie de l'atténauteur variable 15 est reliée à la borne de sortie 6 du dispositif pour transmettre le signal de parole d'émission. La partie réception 3 comprend un dispositif de commande 17 et un expanseur 18 constitué par un atténuateur variable. Le dispositif de commande 17 est relié par deux entrées aux entrées 9 et 10 du dispositif 1 qui reçoivent respectivement l'information de variation de niveaux transmise sur le canal auxiliaire et le signal de pondération "e". Le dispositif de commande 17 a une sortie reliée directement à l'entrée de commande de l'atténuateur 18 pour assurer l'ajustement des valeurs d'atténuation de ce dernier. L'atténuateur variable 18 a une entrée reliée directement à la borne 8 du dispositif 1, pour recevoir le signal de parole démodulé par les circuits du récepteur, non représentés, et une sortie reliée directement à la borne de sortie R de la partie réception. Le dispositif 1 comprend également un circuit comparateur sélecteur 19 situe indifféremment, dans les parties émission ou réception et couplé par une première entrée à une deuxième sortie du circuit de filtrage logique 13 et par une deuxième entrée à une sortie du dispositif de commande 17 de l'expanseur pour comparer les valeurs d'atténuation transmises par le circuit de filtrage logique aux valeurs d'atténuation de commande de l'atténuateur 18 délivrées sur la sortie correspondante du dispositif de commande de l'expanseur 17. Le comparateur sélecteur 19 est couplé à la sortie correspondante du dispositif de commande l'expanseur 17 par l'intermédiaire d'un dispositif à retard 20 constitué par une ligne à retard ou par un circuit monostable. La sortie du comparateur sélecteur 19 est également reliée aux entrées de commande d'atténuation des atténuateurs variables 15 et 16.

On notera que sur la figure 1 les connexions entre les circuits 13, 19, 15 et 16 d'une part 17, 18, 20 et 19 d'autre part sont représentées par un simple trait. La description qui suit montre que ces connexions sont constituées d'autant de conducteurs qu'il y a de pas d'incrémentation dans les atténuateurs variables 15, 16 et 18.

Le fonctionnement du dispositif représenté à la figure 1 est le suivant. Le signal de parole qui est transmis par la voie téléphonique 4 est appliqué à l'entrée E de la partie réception 2 par l'intermédiaire du transformateur hybride 5, il traverse le circuit de compression 11 au travers successivement de la ligne à retard 14, de l'atténuateur 15, et sort sur la borne 6 du dispositif 1. Le détecteur de seuil 12 indique au circuit logique 13, par l'intermédiaire des sorties S1 et S2, les changements de niveaux de puissance du signal de parole non retardé, traversant l'atténuateur 16. Le circuit de filtrage logique 13, en fonction des changements de niveau détectés par le détecteur de seuil 12, commande des atténuateurs 15 et 16, et le codage de l'information de niveau qui est transmis par la borne 7.

A la réception, le signal de parole, démodulé par les circuits du récepteur, non représenté, est appliqué sur la borne 8 à l'entrée de l'atténuateur variable 18 qui est commandé par le dispositif de commande 17. L'atténuateur variable 18 commandé par le dispositif de commande 17 assure l'expansion de dynamique du signal de parole, pour reconstruire à l'entrée du transformateur hybride 5 le signal vocal avec sa dynamique d'origine reconstituée. Le dispositif de commande 17 reçoit les décisions de variation d'atténuation de niveau transmises par le canal auxiliaire de niveau sur la borne 9 et le signal de pondération "e" qui sera par exemple un simple signal d'effacement de la décision de modification de l'atténuation de niveau reçu. Cette dernière solution sera applicable, particulièrement toutes les fois que la transmission radio sera affectée d'évanouissement et que l'information de niveau transmise sur le canal auxiliaire de niveau sera entrelacée dans une trame numérique contenant le signal de parole. On pourra ainsi, dans une transmission de parole à 16 K/bits par seconde, transmettre une information binaire d'effacement tous les 48 bits sur le canal de niveau. Il sera donc possible dans ce cas, de fournir un signal de qualification valable pour les 49 bits en cas d'évanouissement. La décision sera prise en tenant compte des contraintes imposées pour la transmission du signal pour redonner aux éléments binaires effacés, des valeurs introduisant le minimum de composantes situées dans la bande de fréquence mélodique. Les atténuateurs 15, 16 et 18 utilisés pour la réalisation du mode préféré de l'invention, seront de préférence, des atténuateurs incrémentaux statiques, constitués à la façon d'une boite de poids, permettant d'introduire pas à pas, à une cadence déterminée, une atténuation différentielle par exemple, de 9, +3, −3 décibels toutes les six millisecondes. Pour changer de rapport d'atténuation, un code du type "delta" pourra être employé pour coder l'information de niveau. Les commandes fournies par la logique de filtrage et par le circuit d'interpolation ne seront rendues effectives dans ce dernier cas que lorsque deux signaux de codage de niveaux reçus consécutivement, auront la même valeur. Ainsi, si A et Z désignent respectivement les signaux de codage "delta" utilisés, une augmentation ou une diminution du niveau de parole en-dessus ou en-dessous des seuils acceptables sera codée à l'aide de signaux ZZ consécutifs pour commander une atténuation de +3 décibels et deux signaux AA consécutifs pour commander une atténuation de −3 décibels. Aucune variation d'atténuation ne sera commandée lorsque les signaux consécutifs reçus seront combinés de la façon ZA ou AZ. La transmission des signaux A et Z sur le canal auxiliaire sera effectuée par exemple en utilisant une sous-porteuse $f_0$ pour la transmission du signal A et une sous-porteuse de fréquence $f_l$ pour la transmission du signal Z. Dans un mode de réalisation simple de l'invention, la commande des niveaux d'atténuation des atténuateurs consistera à ne prendre en compte que les variations de niveau correspondant aux termes syllabiques de la parole, en respectant les phases alternées consécutives de croissance et de décroissance du signal de parole, le commande d'accroissement s'effectuant lorsque la valeur crête du signal de parole détecté par le détecteur 12 dépasse un premier seuil, la commande de décroissance s'effectuant lorsque la valeur crête du signal de parole détectée par le détecteur de seuil 12 est inférieure à un second seuil, par exemple, inférieur à un seuil de 3 décibels au premier seuil. Un autre mode de réalisation de l'invention pourra également être effectué en utilisant les méthodes de codage et décodage type "delta" déjà décrites dans la demande de brevet français 82 18905 déposée le 10 novembre 1982 au nom de la Demanderesse et correspondant au document EP—A—0 109 880, publié le 30.5.84. En utilisant le codage du type "delta" précédemment décrit les commandes de variation seront transmises par exemple, sous la forme, d'une suite de signaux AA consécutifs pour commander une diminution d'atténuation de −3 décibels lorsque le signal vocal est inférieur au deuxième seuil et, sous la forme de deux signaux ZZ consécutifs pour commander une augmentation d'atténuation de +3 décibels lorsque le signal vocal est supérieur au premier seuil. Lorsque, le niveau du signal vocal se trouve situé entre le premier et le deuxième seuil, le circuit de filtrage logique ne modifiera pas la valeur des atténuations des atténuateurs. La suite des signaux ZA transmis par le circuit de filtrage logique 13 est appliquée, sur la borne 7 du dispositif pour être acheminée ensuite sur le canal auxiliaire de fréquence et la valeur d'atténuation, à une première entrée du comparateur selecteur 19. Les variations d'atténuations transmises par le canal auxiliaire sont également reçues sur la borne 9 du dispositif et appliquées à l'entrée correspondante du dispositif de commande 17 qui retransmet les valeurs d'atténuation obtenues par intégration sur la deuxième entrée du comparateur sélecteur 19 au travers du dispositif à retard 20. Le comparateur sélecteur 19 compare les valeurs d'atténuation qui sont appliquées sur ses premières et deuxièmes entrées respectivement par le circuit de filtrage logique 13 et par le dispositif de commande d'atténuation 17. Le comparateur sélecteur 19 sélectionné parmi les deux valeurs d'atténuation appliquées sur ses entrées, celle qui présente la valeur la plus grande pour l'appliquer sur les entrées respectives de commande des atténuateurs variables 15 et 16. Le dispositif à retard 20 est conçu de façon à assurer le passage sans retard des valeurs d'atténuation reçues par le dispositif de commande 17 lorsque, ces valeurs correspondent à une phase de croissance du signal vocal et retardent par contre d'une valeur constante l'application des valeurs d'atténuation à la deuxième entrée du comparateur sélecteur 19 lorsque ces valeurs correspondent à une phase de décroissance du signal vocal. Les dispositifs à retard de ce type sont connus de l'homme de l'art et par conséquent leur mode de réalisation n'a pas besoin d'être plus largement détaillé. Le retard du dispositif 20 est déterminé pour assurer une atténuation de l'écho quelque soit le temps de transit aller retour du signal sur la liaison 4 entre le transformateur 5 et l'équipement terminal radio non représenté placé à l'autre extrémité. Un retard de 50 millisecondes sera généralement suffisant dans la majorité des applications car les liaisons longues sont généralement déjà équipées de suppresseurs d'échos.

Par l'exemple de réalisation qui vient d'être décrit, il est facile de voir que, à tout signal à niveau constant appliqué sur l'entrée 8 de la partie réception correspond un signal à niveau constant transmis sur la sortie 6 par la partie émission du dispositif, puisque, la somme des atténuations introduite par l'atténuateur 18 et le compresseur 11 est constante. La valeur choisie pour cette somme devra toutefois tenir compte de l'atténuation causée par le transformateur différentiel 5 pour que le niveau du signal sortant de la sortie 6 reste inférieur à celui qui correspondrait à un signal de parole transitant sur la ligne 4 pour que le comparateur sélecteur 19 choisisse, pour la commande des atténuateurs 15 et 16, le signal de sortie du dispositif à retard 20.

Dans ces conditions, lorsqu'un signal significatif de parole est reçu sur l'entrée 8 et en absence d'un signal de parole sur la liaison 4 le détecteur de seuil 12 ne détecte rien et la circuit de filtrage logique applique sur la sortie 7 un signal correspondant à une phase permanente décroissante du signal.

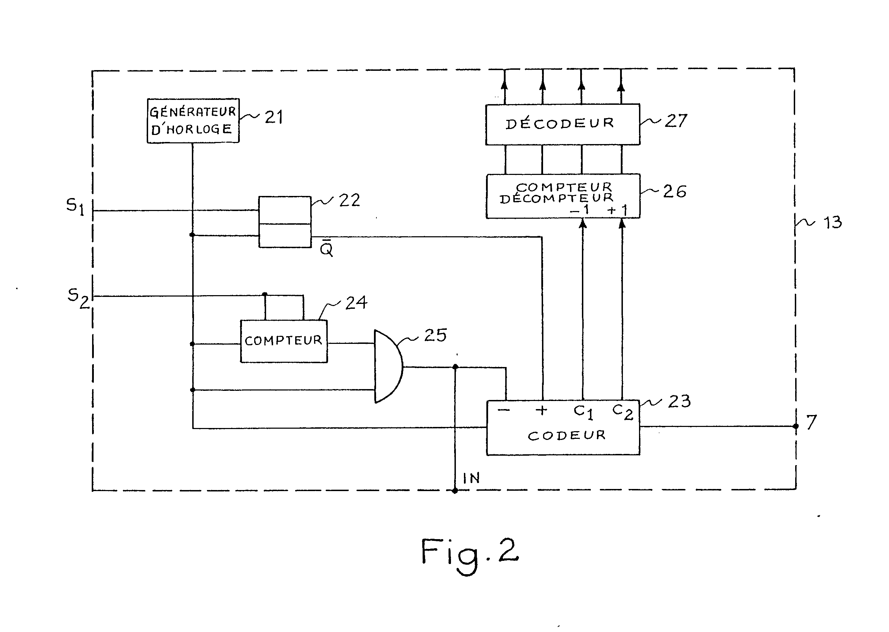

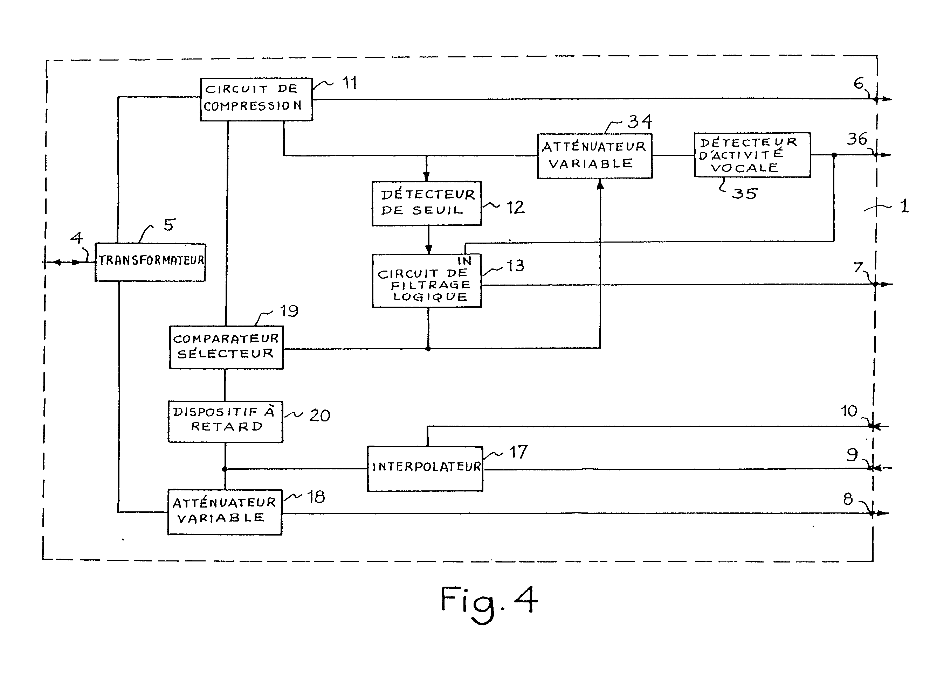

Le circuit de filtrage logique 13 est maintenant décrit à l'aide du schéma représenté à la figure 2. Ce circuit comprend un générateur d'horloge 21, un basculeur 22, un codeur 23, un compteur temporisateur 24 relié à l'entrée du codeur 23 par l'intermédiaire d'une porte ET 25, un compteur-décompteur 26 et un décodeur 27. Le basculeur 22 est relié par son entrée de commande à la sortie S1 du détecteur de seuil 12 de la figure 1 et est relié sur son entrée de remise à zéro à la sortie du générateur d'horloge 21. La sortie complémentée $\overline{Q}$ du basculeur 22 est reliée à l'entrée "+" du codeur 23. Le compteur temporisateur 24 est constitué par deux basculeurs, non représentés, dont les entrées de remise à zéro sont reliées à la sortie S2 du détecteur de seuil 12 de la figure 1, et dont l'entrée de comptage est reliée à la sortie du générateur d'horloge 21. La porte 25 est une porte ET à deux entrées dont une première entrée est reliée à la sortie du compteur 24 constitué par la sortie du dernier basculeur, la seconde entrée est reliée à la sortie du générateur d'horloge 21. La sortie de la porte ET 25 est reliée à l'entrée marquée "−" du codeur 23. Le codeur 23 est également relié par son entrée H à la sortie du générateur d'horloge 21 et par son entrée marquée "−" à une entrée marquée "IN" de la logique de filtrage dont la fonction sera explicitée plus loin lors de la description de la figure 4. Les sorties C1, C2 du codeur 23 sont reliées respectivement aux entrées de décomptage "−1" et de comptage "+1" du compteur-décompteur 26. Les sorties du compteur 26 sont appliquées à l'entrée d'un décodeur 27 qui délivre sur ses sorties des poids d'atténuation successifs de 3dB, 9dB, 12dB etc aux entrées de commande des atténuateurs variables 15 et 16 de la figure 1.

La logique de filtrage permet, à partir des signaux de dépassement de seuil fournis par le détecteur de seuil 12 de la figure 1, de commander les atténuateurs variables de la figure 1 et d'assurer la codage numérique du canal auxiliaire par le codeur 23 relié à la sortie 7 de la partie émission. Le générateur d'horloge 21 fournit, à une cadence par exemple de 6 millisecondes, des signaux binaires de cadencement des informations d'adaptation de niveaux transmises sur le canal auxiliaire. Si l'amplitude du signal vocal, mesurée par le détecteur de seuil 12 de la figure 1, dépasse le seuil supérieur, le détecteur de seuil 12 fournit, sur sa sortie S1, un premier signal qui provoque le basculement du basculeur 22. Si le changement d'état du basculeur 22 s'effectue dans l'intervalle de temps séparant deux instants d'horloge consécutifs, le retour à zéro du basculeur 22 à l'instant d'horloge qui suit l'instant du premier basculement du basculeur 22 provoqué par le signal d'orloge appliqué sur l'entrée de remise à zéro, provoque l'envoi d'une impulsion positive à l'entrée "+" du codeur 23.

Si l'amplitude du signal vocal mesurée par le détecteur de seuil 12 dépasse le seuil inférieur, un signal est appliqué par la sortie du détecteur de seuil 12 à l'entrée de remise à zéro du compteur 24 qui réinitialise le compteur 24 pour un nouveau comptage. Dans l'exemple de réalisation, le compteur 24 est formé par deux basculeurs de manière à compter trois pas d'horloge de 6 millisecondes successifs. Le comptage du compteur 24 a lieu chaque fois que le niveau syllabique du signal vocal mesuré par le détecteur de seuil 12 est inférieur au deuxième seuil. En effet dans ce cas, la commande de l'ouverture de la porte 25 a lieu après trois par du signal d'horloge fourni par le générateur d'horloge 21, et tant que la porte 25 est ouverte un signal d'horloge est appliqué sur l'entrée marquée "−" du codeur 23. Ainsi lorsque le niveau du signal vocal est en période croissante et est supérieur au premier seuil, une impulsion est appliquée sur l'entrée marquée "+" du codeur 23 et dans le cas contraire lorsque le niveau du signal vocal est en période décroissante et est in inférieur au deuxième seuil une impulsion est appliquée sur l'entrée "−" du codeur 23. On remarquera toutefois, que l'impulsion d'horloge n'est appliquée sur l'entrée marquée "−" du codeur 23 que si un temps suffisant de 18 millisecondes s'est déjà écoulé depuis le passage du niveau du signal vocal en-dessous de deuxième seuil.

Ainsi si le signal vocal dépasse au moins une fois pendant 18 ms, le seuil inférieur sans dépasser le seuil supérieur aucune commande en + ou en − n'est transmise au codeur 23.

Le codeur 23 est un codeur de code type "delta" connu qui émet, lorsqu'aucun signal n'est appliqué sur ses entrées "+" et "−", une suite alternée de signaux A et Z correspondant au code "delta" précédemment décrit. A la réception d'une impulsion en provenance du basculeur 22 appliquée sur l'entrée "+", le codeur 23 délivre sur la sortie 7 du dispositif 1 une suite de signaux ZZ consécutifs en inversant par exemple le signal en cours d'émission si le signal précédent est un signal Z ou en décalant la séquence ZZ d'un bit si le signal précédent est un signal A. A la réception d'un signal fourni par la porte 25 sur l'entrée "−" du codeur 23, la sortie du codeur 23 émet une suite de signaux AA consécutifs en inversant par exemple le signal devant être émis, si le bit précédent est un signal A et en décalant la suite des signaux AA si le signal précédent est un signal Z. En l'absence d'impulsion appliqué sur les entrées "+" et "−" du codeur 23, celui-ci transmet une alternance de A et de Z sur sa sortie 7 et le compteur-décompteur 26 reste en position fixe. Par contre à chaque impulsion appliquée sur l'entrée "+" du codeur 23, un signal d'incrémentation est fourni par la sortie C2 du codeur 23 sur l'entrée marquée "+1" du compteur-décompteur 26, et à chaque impulsion appliquée sur l'entrée marquée "−" du codeur 23, un signal est fourni par la sortie C1 du codeur 23 sur l'entrée de décrémentation marquée "−1" du compteur-décompteur 26. Pour assurer le synchronisme des commandes d'atténuation des atténuateurs et du code transmis sur le canal auxiliaire, le codeur 23 émet simultanément les signaux de commande du compteur-décompteur 26 avec les signaux de code transmis sur le canal auxiliaire.

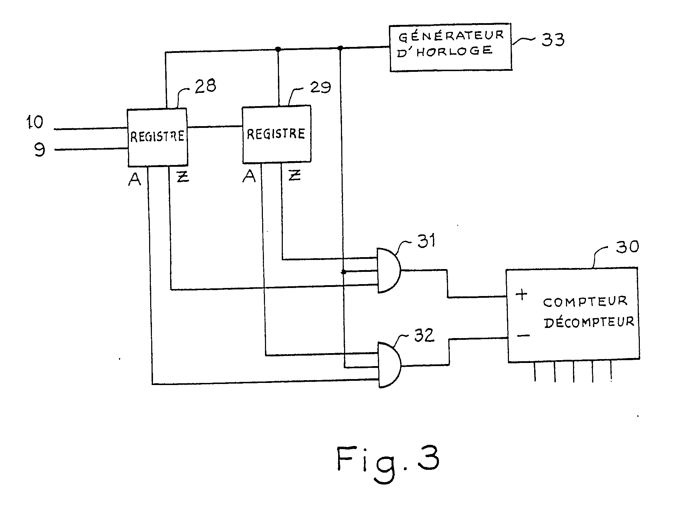

Un exemple de réalisation du dispositif de commande 17 est maintenant décrit à l'aide du schéma représenté à la figure 3. Le dispositif de commande 17 comprend un ensemble de registres 28 et 29, un compteur-décompteur 30 commandé sur ses entrées de comptage marquées "+" et de décomptage marquées "−" par les sorties de portes ET 31 et ET 32 ainsi qu'un générateur d'horloge de réception 33 qui peut être avantageusement identique à l'horloge d'émission 21, pour assurer la synchronisation de la lecture et de l'écriture des données dans les registres 28 et 29 et la progression du compteur-décompteur 30. Le registre 28 a ses entrées reliées directement à l'entrée 9 du dispositif 1 de la figure 1 pour recevoir du démodulateur du récepteur, non représenté, les signaux A ou Z transmis par le canal auxiliaire et dont les combinaisons permettent de reconnaître les périodes de croissance ou de décroissance du signal vocal. Le registre 28 est également relié à l'entrée 10 du dispositif 1 de la figure 1 pour recevoir, le cas échéant, une décision binaire d'effacement "e" infirmant lorsqu'elle est présente la décision correspondant au signal A ou Z présent sur l'entrée 9. Ce signal de pondération "e" pourra être fourni de façon connue par les circuits de démodulation non représentés du récepteur chaque fois qu'il y aura un doute sur la qualité des signaux A et Z reçus, causé, soit par un bruit radioélectrique exagéré présent sur le canal de transmission ou par une période d'évanouissement du signal radioélectrique reçu. Les signaux A et Z reçus sont d'abord mémorisés à l'apparition d'un signal d'horloge fourni par le générateur 33 dans le registre 28 puis transférés du registre 28 au registre 29. Le registre 28 contient les signaux A et Z qui sont en cours de réception et le registre 29 contient les signaux A et Z précédemment reçus. La porte ET 31 a trois entrées, les première et deuxième entrées sont reliées respectivement aux sorties des registres 28 et 29 mémorisant les signaux Z et la troisième entrée est reliée à la sortie de l'horloge·33. Le signal d'horloge fourni par le générateur d'horloge 33, est retransmis à la sortie de la porte ET 31 lorsque simultanément deux signaux Z sont mémorisés à l'intérieur des registres 28 et 29, pour être appliqué à l'entrée marquée "+" de comptage du compteur-décompteur 30. De même la porte ET 32 a trois entrées, les première et deuxième entrées sont reliées respectivement aux sorties des registres 28 et 29 qui transmettent les signaux A et sont reliés par une troisième entrée à la sortie d'horloge 33. La porte ET 32 transmet le signal d'horloge fourni par le générateur d'horloge 33 à l'entrée marquée "−" du compteur 30 lorsque simultanément deux signaux A sont mémorisés à l'intérieur des registres 28 et 29.

Le fonctionnement du dispositif de commande 17 est le suivant. La décision binaire A ou Z donnée par la valeur du signal présent sur le fil 10 est introduite dans le premier registre 28 et l'arrivée, le cas échéant, d'un signal de pondération e sur le fil 9 provoque l'annulation de la décision. A chaque pas d'horloge fourni par le générateur 33 le contenu du registre 28 est transféré dans le registre 29. Lorsque deux signaux Z consécutifs sont reçus respectivement dans les registres 28 et 29, la porte ET 31 transmet une impulsion d'accroissement au compteur-décompteur 30. Dans le cas contraire, lorsque deux signaux A consécutifs sont reçus et mémorisés à l'intérieur des registres 28 et 29, la porte ET 32 transmet une impulsion de décroissance au compteur-décompteur 30. L'atténuateur variable 18 de la figure 1 est alors commandé par l'état des sorties du compteur-décompteur 30 et une atténuation de 3 décibels est ajoutée ou retranchée à chaque variation de l'état de ce dernier.

Le dispositif selon l'invention qui vient d'être décrit s'applique avantageusement au cas où la liaison radioélectrique est en mode duplex avec émission et réception permanente aux deux extrémités de la voie de transmission et au cas où l'émetteur radioélectrique est en émission seulement pendant les périodes d'activité vocale.

Dans le premier cas, l'écho est acheminé à puissance réduite et l'expanseur de la partie réception à l'autre extrémité de la voie de transmission est maintenu à son niveau d'atténuation maximale; l'écho se trouve par conséquent supprimé par l'action de l'expanseur de l'autre extrémité. Lorsque le niveau de parole sur la liaison 4 est tel qu'il dépasse d'une quantité suffisante le niveau de l'écho pour faire fonctionner le détecteur de seuil 12, la transmission est reprise normalement dans ce sens de transmission. On notera qu'alors, la transmission dans l'autre sens sera interrompue par l'effet anti-écho déclenché par le comparateur sélecteur de l'autre extrémité.

Dans le deuxième cas où l'émetteur radioélectrique est en émission seulement pendant les périodes d'activité vocale, l'effet anti-écho décrit précédemment a pour effet de transformer la liaison duplex en une liaison en alternat automatique qui a néanmoins la possibilité de pouvoir interrompre son correspondant en élevant son niveau de parole. Un problème peut se poser cependant dans le cas où un dispositif fonctionne dans un système de transmission en alternat automatique où il n'est pas possible de recevoir des informations lorsque le dispositif émet. Dans ce cas, il ne devient plus du tout intéressant pour l'utilisateur de conserver la possibilité d'interrompre le correspondant distant qui émet en élevant son propre niveau de parole car si le correspondant distant émet il ne peut plus écouter et il est donc incapable d'entendre un signal d'interruption. Dans cette hypothèse le comparateur sélecteur 19 perd son intérêt et peut être remplacé avantageusement par un blocage de la détection d'une activité vocale à une extrémité de voie pour le signal arrivant sur l'entrée 9 de la partie réception de cette extrémité.

Par contre, si dans un système la détection de l'activité vocale est utilisée pour supprimer l'occupation de l'éther par des émissions non significatives, l'action du comparateur sélecteur 19 combiné avec celle d'un détecteur d'activité vocale aura pour intérêt de supprimer le déclenchement du détecteur d'activité vocale sur des échos qui annuleraient la majeure partie de son intérêt. Ce cas pourra se rencontrer notamment dans les systèmes de radiotéléphone à saut de fréquence à accès multiple par code.

La figure 4 représente un mode de réalisation du dispositif de l'invention adapté à ce dernier cas. Le dispositif représenté à la figure 4 est constitué par les mêmes éléments que ceux de la figure 1 qui sont repérés par les mêmes références et il est complété par l'adjonction d'un détecteur d'activité vocale 35 dont l'entrée est couplée à l'entrée du détecteur de seuil 12 par l'intermédiaire d'un atténuateur variable 34. L'atténuateur variable 34 est commandé par les signaux sortant du circuit de filtrage logique 13 et transmet les signaux de parole entrant dans le détecteur de seuil 12 à destination de l'entrée du détecteur d'activité vocale 35. La sortie du détecteur d'activité vocale est reliée à l'entrée d'initialisation IN du circuit de filtrage logique 13 pour commander au codeur 23 de la logique de filtrage représentée à la figure 2, l'émission d'une suite continue de signaux A lorsqu'il n'y a pas d'activité vocale. Cette disposition permet lorsqu'il n'y a pas d'activité vocale de régler automatiquement l'atténuation du circuit de compression 11 à son niveau minimum et l'atténuation de l'atténuateur variable 18 à son niveau d'atténuation maximum. La sortie détecteur d'activité vocale 35 est également reliée à une sortie 36 du dispositif 1 pour interdire l'émission des circuits d'émission de parole de l'émetteur, non représentés, lorsqu'il n'y a pas d'activité vocale.

Le détecteur d'activité vocale utilisé pour la mise en oeuvre de l'invention pourra être du type de celui décrit dans la demande de brevet français 79 24227 déposée au nom de la Demanderesse.

Le dispositif de la figure 4 restitue correctement le signal de parole lorsque le signal de parole sur la liaison 4 est prioritaire alors que le signal atténué par l'action du comparateur sélecteur 19 est atténué au maximum lorsque le signal est dû à un écho. Cette solution présente spécialement de l'intérêt toutes les fois que la seconde extrémité est constituée par une station radiotéléphonique mobile ne disposant pas d'un dispositif de blocage des échos, en particulier lorsque microphone et écouteur forment une liaison à quatre fils, dans ce cas la parole du locuteur de la station mobile ne subit aucun blocage, seul le locuteur du réseau général doit parler plus fort pour être entendu du locuteur mobile.

Cette solution est particulièrement efficace si la liaison est sujette à des évanouissements et des brouillages entraînant l'apparition fréquente des signaux d'effacemente sur l'entrée 10. Au bout d'un certain temps, il y a intégration des erreurs et les niveaux entrant dans le comparateur 19 n'ont plus de sens. L'utilisation du détecteur d'activité vocale permet de réinitialiser la position des atténuateurs 15, 16 et 18 en partant de la même valeur à chaque début d'une période d'activité vocale.

L'invention n'est pas limitée aux dispositifs de réalisation qui viennent d'être décrits, il va de soi qu'elle s'applique également à d'autres variantes de réalisation notamment, à celles consistant à intégrer les fonctions qui viennent d'être décrites dans les calculs d'un microprocesseur regroupant tous les traitements numériques effectués sur le signal de parole. En particulier dans ce dernier mode de réalisation la fonction de détection d'activité vocale pourra facilement être intégrée aux autres fonctions de calcul d'un microprocesseur et en particulier à celles de calcul des signaux de commande des atténuateurs, ces derniers étant déjà significatifs de la présence d'une activité vocale.

Les domaines d'application de l'invention sont tous les cas d'utilisation d'une liaison radioélectrique téléphonique difficile où par suite soit du raccordement d'une extrémité au moins à un réseau deux fils soit par utilisation d'un dialogue mains libres sur haut-parleur, une réinjection en retour peut se produire.

L'utilisation d'une voie auxiliaire de niveau améliore la qualité et permet d'utiliser au mieux les codages en réglant le niveau de la parole à la bonne valeur située à égale distance entre la saturation et le bruit de quantification.

L'invention n'est pas non plus limitée à un mode de codage particulier de la parole, elle s'applique au contraire à tous les procédés de codage analogique ou numérique de celle-ci.

En analogique, le canal auxiliaire peut transmettre les informations de niveau en numérique par multiplexage en fréquence avec la parole, de la façon déjà réalisée dans le SYNCOMPEX.

En numérique la transmission pourra s'effectuer à vitesse moyenne en V-UHF avec un codage de l'ordre de 16 Kbits/s sur ces canaux à fréquence fixe ou à saut de fréquence ou à vitesse réduite environ 2400 bits/s par vocoder dans toutes les gammes.

**Revendications**

1. Dispositif de traitement de la parole pour équipements radioélectriques adaptés à la transmission et à la réception de la parole, du type comprenant, un circuit (11) de compression de la dynamique du signal de parole, formé par au moins un atténuateur variable d'émission (15, 16), pour maintenir le niveau de parole à peu près constant durant l'émission de la parole et un expanseur (18) pour rétablir à la réception de niveau de parole avant sa compression, un dispositif (17) de commande de l'expanseur sensible à la valeur de l'atténuation introduite par l'atténuateur d'émission et transmise sur un canal (7) radioélectrique auxiliaire de l'équipement, un circuit de filtrage logique (13) du niveau de parole couplé au circuit (11) de compression de la dynamique du signal de parole, pour fournir au circuit (11) de compression une valeur d'atténuation en fonction du niveau du signal de parole, un circuit comparateur sélecteur (19) couplé par une première entrée à une sortie du circuit de filtrage logique (13) et par une deuxième entrée à une sortie du dispositif (17) de commande de l'expanseur, pour comparer les valeurs d'atténuation transmises par le circuit de filtrage logique (13) aux valeurs d'atténuation reçues par le dispositif (17) de commande de l'expanseur, le circuit comparateur sélecteur étant également couplé aux entrées de commande d'au moins un atténuateur d'émission (15, 16) pour ajuster la valeur d'atténuation de l'atténuateur à la valeur d'atténuation délivrée par la sortie du circuit de filtrage logique (13) lorsque la valeur de l'atténuation délivrée par le circuit de filtrage est supérieure à la valeur d'atténuation délivrée par la sortie du dispositif (17) de commande de l'expanseur et pour ajuster la valeur d'atténuation de l'atténuateur à la valeur de l'atténuation délivrée par la sortie du dispositif de commande de l'expanseur, dans le cas contraire, lorsque la valeur d'atténuation délivrée par la sortie du dispositif de commande de l'expanseur (17) est plus grande que celle délivrée par la sortie du circuit de filtrage logique (13), caractérisé en ce que le circuit de filtrage logique (13) commande le circuit de compression par pas d'atténuation à peu près constants, et est couplé au circuit (11) de compression de la dynamique du signal de parole au travers d'un détecteur de seuil (12) pour appliquer à l'entrée du circuit comparateur une valeur d'atténuation croissante lorsque la puissance du signal de parole à la sortie du circuit de compression dépasse un premier seuil de puissance et une valeur d'atténuation décroissante lorsque la puissance du signal de parole est inférieure à un second seuil de puissance inférieur au premier seuil et transmet sur le canal auxiliaire lorsque le dispositif est en émission, une information incrémentable de niveau représentée par une suite d'éléments binaires ayant une première configuration lorsque le niveau en puissance du signal de parole détecté par le détecteur de seuil est en phase de croissance, une deuxième configuration lorsque le niveau en puissance du signal de parole est en phase de décroissance et au moins une troisième configuration lorsque le niveau puissance du signal de parole conserve une valeur à peu près constante, et en ce que la deuxième entrée du circuit comparateur sélecteur (19) est couplée à la sortie du dispositif de commande de l'expanseur (17) au moyen d'un dispositif à retard (20) qui laisse passer sans retard les valeurs d'atténuation retransmises par le dispositif de commande (17) lorsque ces valeurs correspondent à une phase de croissance du signal vocal et retarde la transmission de ces valeurs en phase de décroissance du signal vocal.

2. Dispositif selon la revendication 1, caractérisé en ce que les informations incrémentales de niveau transmises par le circuit de filtrage logique (13) sont codées en code "delta".

3. Dispositif selon les revendications 1 et 2, caractérisé en ce que le dispositif (17) de commande de l'expanseur inhibe les variations d'atténuation sur le signal qu'il délivre lorsqu'il reçoit un signal d'effacement caractérisant un défaut de transmission.

4. Dispositif selon l'une quelconque des revendications 1, 2 et 3, caractérisé en ce qu'il comprend également un circuit de détection d'activité vocale couplé à la sortie du circuit de compression (11) pour inhiber les circuits d'émission de l'émetteur en l'absence d'activité vocale.

5. Dispositif selon la revendication 3, caractérisé en ce que le circuit de détection d'activité vocale est couplé à la sortie du circuit de compression (11) au travers d'un atténuateur variable (34) dont le rapport d'atténuation est commandé par des signaux d'atténuation délivrés par le circuit de filtrage logique (13) de façon à interdire les déclenchements intempestifs du détecteur d'activité vocale sur des échos provoqués par l'interaction des circuits de réception sur les circuits de réception extérieurs au dispositif.

6. Dispositif selon l'une quelconque des revendications 1 à 5, caractérisé en ce qu'il est utilisé dans un système de transmission de la parole analogique dans lequel le canal auxiliaire est multiplexé en fréquence.

7. Dispositif selon l'une quelconque des revendications 1 à 5, caractérisé en ce qu'il est utilisé dans un système de transmission de la parole numérique dans lequel la parole est multiplexée par paquets dans le temps.

8. Dispositif selon l'une quelconque des revendications 1 à 7, caractérisé en ce que les moyens de traitement du signal de parole comprennent un microprocesseur.

**Patentansprüche**

1. Vorrichtung zur Sprachsignalbearbeitung für Funkgeräte, die für die Aussendung und den Empfang von Sprachsignalen eingerichtet sind, mit einem Kreis (11) zur Kompression der Dynamik des Sprachsignals, der aus mindestens einem variablen Sende-Dämpfungsglied (15, 16), um den Pegel des Sprachsignals während der Dauer des Sprachsignals ungefähr konstant zu halten, und aus einem Expander (18) besteht, um auf der Empfangsseite den ursprünglichen Pegel des Empfangssignals wiederherzustellen, mit einer Vorrichtung (17) zur Steuerung des Expanders, die auf den vom Sendedämpfungsglied eingeführten Dämpfungswert, der über einen zusätzlichen Funkkanal (7) des Geräts übertragen wird, anspricht, mit einem logischen Filterkreis (13) für den Sprachpegel, der an den Kreis (11) zur Kompression der Dynamik des Sprachsignals gekoppelt ist, um dem Kompressionskreis (11) einen Dämpfungswert abhängig vom Pegel des Sprachsignals zu liefern, mit einem Komparator-Auswahlkreis (19), der über einen ersten Eingang an einen Ausgang des logischen Filterkreises (13) und über einen zweiten Eingang an einen Ausgang der Vorrichtung (17) zur Steuerung des Expanders angeschlossen ist, um die vom logischen Filterkreis (13) übertragenen Dämpfungswerte mit den Dämpfungswerten zu vergleichen, die von der Vorrichtung zur Steuerung des Expanders empfangen werden, wobei der Komparator-Auswahlkreis außerdem an die Steuereingänge mindestens eines Sende-Dämpfungsglieds (15, 16) gekoppelt ist, um den Dämpfungswert des Dämpfers auf den vom Ausgang des logischen Filterkreises (13) gelieferten Dämpfungswert einzustellen, wenn der vom Filterkreis gelieferte Dämpfungswert größer als der vom Ausgang der Vorrichtung (17) zur Steuerung des Expanders gelieferte Dämpfungswert ist, bzw. um den Dämpfungswert des Dämpfers auf den vom Ausgang der Vorrichtung zur Steuerung des Expanders gelieferten Dämpfungswert im entgegengesetzten Fall einzustellen, wenn der vom Ausgang der Vorrichtung zur Steuerung des Expanders (17) gelieferte Dämpfungswert größer als der vom Ausgang des logischen Filterkreises (13) gelieferte Dämpfungswert ist, dadurch gekennzeichnet, daß der logische Filterkreis (13) den Kompressionskreis über im wesentlichen konstante einzelne Dämpfungsschritte steuert und mit dem Kreis zur Kompression der Dynamik des Sprachsignals über einen Schwellendetektor (12) gekoppelt ist, um an den Eingang des Komparatorkreises einen zunehmenden Dämpfungswert anzulegen, wenn die Leistung des Sprachsignals am Ausgang des Kompressionskreises einen ersten Leistungs-Schwellwert übersteigt, bzw. einen abnehmenden Dämpfungswert, wenn die Leistung des Sprachsignals niedriger als ein zweiter Leistungsschwellwert ist, der unterhalb des ersten Schwellwerts liegt, daß der logische Filterkreis über den Hilfskanal, wenn die Vorrichtung als Sender wirkt, eine inkrementierbare Pegelinformation überträgt, die von einer Folge von Binärelementen mit einer ersten Konfiguration gebildet wird, wenn der Leistungspegel des vom Schwellendetektor erfaßten Sprachsignals gerade ansteigt, und mit einer zweiten Konfiguration, wenn der Leistungspegel des Sprachsignals gerade abnimmt, und mit mindestens einer dritten Konfiguration, wenn der Leistungspegel des Sprachsignals einen im wesentlichen konstanten Wert beibehält, und daß der zweite Eingang des Komparator-Auswahlkreises (19) an den Ausgang der Steuervorrichtung für den Expander (17) über eine Verzögerungsvorrichtung (20) gekoppelt ist, die ohne Verzögerung die von der Steuervorrichtung (17) weiterübertragenen Dämpfungswerte durchläßt, wenn diese Werte einer Steigerungsphase des Sprachsignals entsprechen, und die Übertragung dieser Werte bei abnehmendem Leistungspegel des Sprachsignals verzögern.

2. Vorrichtung nach Anspruch 1, dadurch gekennzeichnet, daß die inkrementierbaren Pegelwerte, die vom logischen Filterkreis (13) übertragen werden, im Delta-Kode verschlüsselt sind.

3. Vorrichtung nach den Ansprüchen 1 und 2, dadurch gekennzeichnet, daß die Vorrichtung (17) zur Steuerung des Expanders die Dämpfungsschwankungen des von ihr gelieferten Signals unterdrückt, wenn sie ein Löschsignal empfängt, das einen Übertragungsfehler kennzeichnet.

4. Vorrichtung nach einem beliebigen der Ansprüche 1, 2 und 3, dadurch gekennzeichnet, daß sie außerdem einen Kreis zur Erfassung der Sprachaktivität aufweist, der an den Ausgang des Kompressionskreises (11) angeschlossen ist, um die Sendekreise des Senders bei nicht vorhandener Sprachtätigkeit zu sperren.

5. Vorrichtung nach Anspruch 3, dadurch gekennzeichnet, daß der Kreise zur Erfassung der Sprachaktivität an den Ausgang des Kompressionskreises (11) über ein variables Dämpfungsglied (34) angeschlossen ist, dessen Dämpfungsverhältnis von Dämpfungssignalen gesteuert wird, die vom logischen Filterkreis (13) geliefert werden, so daß die Auslösungen des Sprachaktivitätsdetektors zum falschen Zeitpunkt aufgrund der durch Einwirken der Empfangskreise auf die Empfangskreise außerhalb der Vorrichtung erzeugten Echos unterdrückt werden.

6. Vorrichtung nach einem beliebigen der Ansprüche 1 bis 5, dadurch gekennzeichnet, daß sie in einem analogen Sprachsignalübertragungssystem verwendet wird, in dem der Hilfskanal frequenzmultiplexiert ist.

7. Vorrichtung nach einem beliebigen der Ansprüche 1 bis 5, dadurch gekennzeichnet, daß sie in einem digitalen Sprachsignalübertragungssystem verwendet wird, in dem das Sprachsignal in Paketen zeitmultiplexiert ist.

8. Vorrichtung nach einem beliebigen der Ansprüche 1 bis 7, dadurch gekennzeichnet, daß die Mittel zur Sprachsignalbearbeitung einen Mikroprozessor enhalten.

**Claims**

1. A device for processing speech signals for radioelectric equipments conceived to transmit and to receive speech signals, of the type comprising a circuit (11) for compressing the dynamic of the speech signal, constituted by at least one variable transmission attenuator (15, 16) for maintaining the level of the speech signal approximately constant during the transmission of speech signals, and by expander (18) for restoring, at the reception side, the original level of the speech signal prior to its compression, a device (17) for controlling the expander as a function of the attenuation value introduced by the transmission attenuator and transmitted on an auxiliary radioelectric channel (7) of the equipment, a logic speech level filtering circuit (13) coupled to the circuit (11) for compressing the dynamic of the speech signal in order to supply to the compression circuit (11) an attenuation value in accordance with the level of the speech signal, a comparator-selector circuit (19) coupled via a first input to an output of the logic filtering circuit (13) and via a second input to an output of the device (17) for controlling the expander, in order to compare these attenuation values transmitted by the logic filtering circuit (13) with the attenuation values received by the expander control device (17), the comparator-selector circuit being further coupled to the control inputs of at least one transmission attenuator (15, 16) in order to adjust the attenuation value of the attenuator to the attenuation value delivered by the output of the logic filtering circuit (13), if the attenuation value delivered by the filtering circuit exceeds the attenuation value delivered by the output of the expander control device (17), and to adjust the attenuation value of the attenuator to the attenuation value delivered by the output of the expander control device in the inverse case, if the attenuation value delivered by the output of the expander control device (17) exceeds that delivered by the output of the logic filtering circuit (13), characterized in that the logic filtering circuit (13) controls the compression circuit by attenuation steps which are substantially constant, and that the logic filtering circuit is coupled to the circuit (11) for compressing the dynamic of the speech signal via a threshold detector (12) for applying to the input of the comparator circuit an increasing attenuation value if the power level of the speech signal at the output of the compression circuit exceeds a first power threshold, and a decreasing attenuation value if the power level of the speech signal is lower than a second power level threshold below the first threshold, and that the logic filtering circuit transmits on the auxiliary channel, if the device operates as transmitter, an incrementable level information represented by a succession of binary elements of a first configuration if the power level of the speech signal detected by the threshold detectors is in an increasing phase, of a second configuration if the power level of the speech signal is in a decreasing phase, and at least one third configuration if the power level of the speech signal keeps a substantially constant value, and that the second input of the comparator-selector circuit (19) is coupled to the output of the expander control device (17) through a delay device (20) which transmits without delay the attenuation values retransmitted by the control device (17), if these values correspond to an increasing phase of the speech signal, whereas the transmission of these values is delayed during a decreasing phase of the speech signal.

2. A device according to claim 1, characterized in that the incremental level informations transmitted by the logic filtering circuit (13) are coded according to the delta code.

3. A device according to claims 1 and 2, characterized in that the expander control device (17) suppresses the attenuation variations on the signal which it delivers, if it receives a cancelling signal signifying a transmission fault.

4. A device according to any one of claims 1, 2 and 3, characterized in that it further comprises a circuit for detecting the speech activity, this circuit being coupled to the output of the compression circuit (11) for blocking the transmission circuit of the transmitter in the absence of speech activity.

5. A device according to claim 3, characterized in that the circuit for detecting the speech activity is coupled to the output of the compression circuit (11) via a variable attenuator (34), the attenuation ratio of which is controlled by attenuation signals delivered by the logic filtering circuit (13) such that the untimely releases of the speech activity detector due to echos caused by the interaction of the reception circuit on the reception circuit outside of the device are blocked.

6. A device according to any one of claims 1 to 5, characterized in that it is used in an analog speech transmission system in which the auxiliary channel is frequency multiplexed.

7. A device according to any one of claims 1 to 5, characterized in that it is used in a digital speech transmission system in which the speech is time multiplexed by bundles.

8. A device according to any one of claims 1 to 7, characterized in that the means for processing the speech signal comprise a microprocessor.

Fig.1

Fig.2

Fig. 3

Fig.4

0 113 615